# NEUE EUROPÄISCHE PATENTSCHRIFT

(11) **EP 0 843 958 B2**
(45) Veröffentlichungstag und Bekanntmachung des Hinweises auf die Entscheidung über den Einspruch: **09.09.2009**
(45) Hinweis auf die Patenterteilung: 04.09.2002
(21) Anmeldenummer: 97119972.4
(22) Anmeldetag: 14.11.1997
(51) Int. Cl.: A01B 79/00, A01C 15/00, A01M 7/00

(54) **Verfahren zum Steuern und/oder Regeln von landwirtschaftlichen Bearbeitungs- und/oder Verteilmaschinen**
Method for controlling and/or regulating agricultural working and/or distributing machines
Méthode pour contrôler et/ou régler des machines agricoles de travail et/ou de distribution

(30) Priorität: 21.11.1996 DE 19648223
(43) Veröffentlichungstag der Anmeldung: 27.05.1998
(60) Teilanmeldung: 01119189.7
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dipl.-Ing., 49134 Wallenhorst-Rulle (DE)

(56) Entgegenhaltungen:
- EP-A- 0 458 107
- EP-A- 0 749 677
- DE-A- 4 342 171
- DE-A- 4 423 083
- US-A- 5 646 846
- REUSCH-HEEGE: "optische sensoren steuern die stickstoffdüngung" LANDTECHNIK, Bd. 51, Nr. 2, April 1996, Seiten 68-69, XP000580395

## Beschreibung

Die Erfindung betrifft ein Verfahren gemäß des Oberbegriffes des Patentanspruches 1.

Ein derartiges Verfahren ist beispielsweise in der DE-OS 43 22 293 beschrieben.

Dieses Verfahren weist eine zentrale Rechnerstation auf, in der Geographie der Betriebsflächen und Daten für die Saatgut und Düngerausbringung eingespeichert sind. Die Nährstoffversorgung der einzelnen Betriebsflächen ist anhand der Geographie der Felder nach einem Koordinatensystem abgelegt. Desweiteren werden beim Ernten die Ertragsdaten je Standort der Betriebsfläche ermittelt. Anhand der Ertragsdaten kann eine Korrektur bzw. Anpassung der auszubringenden Dünger- und Saatgutmengen erfolgen. Dieses System kann im Online-Betrieb arbeiten, so daß aktuell vom zentralen Rechner in das System eingegriffen werden kann, d.h., daß aktuell beim Ausbringen der Dünger- und Saatgutmenge die im Prozeßrechner befindlichen Daten während des Ausbringvorganges verändert werden, so daß aufgrund der aktualisierten Daten die Maschine gesteuert und geregelt werden kann.

Bei diesem bekannten Verfahren wird auf der Grundlage der Ertragsdaten die Berechnung für die zukünftige Saatgut- und Düngerausbringung berechnet.

Wenn spätere Düngungen in einem größeren Zeitraum nach dem Ernten vorgenommen wird, werden jedoch keine aktuellen Anpassungen mehr beim Ausbringen des Düngers vorgenommen.

Die DE-OS 40 16 603 zeigt ein Verfahren zum Ausbringen von Saatgut, Dünger und Pflanzenschutzmitteln. Diesem System ist ein Sensor zugeordnet, welcher Informationen über die Beschaffenheit und den Zustand des Pflanzenbewuchses auf der zu bearbeitenden und zu bestellenden Fläche aktuell erkennt. Es kann ein weiterer Sensor vorgesehen sein, welcher den Nährstoffbedarf der Pflanzen in Zusammenarbeit mit dem Bordcomputer ermittelt und in Abhängigkeit des ermittelten Nährstoffbedarfes die Verteilmaschine über einen Bordcomputer steuert. Bei diesem Verfahren wird aufgrund der von dem Sensor ermittelten Daten und auf dieser Grundlage in dem Bordcomputer berechneten Werte die Düngerausbringmenge bzw. Saatgutausbringmenge je Flächeneinheit bestimmt.

Der Erfindung liegt die Aufgabe zugrunde, Voraussetzungen dafür zu schaffen, um auf Grund gesicherter Erkenntnisse eine optimierte Materialausbringung (Saatgut, Dünger, Pflanzenschutzmittel etc.) zu gewährleisten.

Gemäß dem erfindungsgemäßen Verfahren sind die kennzeichnenden Merkmale des Anspruches 1 vorgesehen. Infolge dieser Maßnahmen wird zunächst die Voraussetzung für eine lückenlose Dokumentation der Materialausbringung geschaffen. Es läßt sich somit exakt nachvollziehen, an welcher Stelle auf welchem Feld wieviel Material zu welcher Zeit ausgebracht worden ist. Somit ist zu ermitteln, welcher aktuelle Bedarf für die Materialausbringung (Dünger, Saatgut, Pflanzenschutzmitteln etc.) besteht, ist vorgesehen, daß an der Verteilmaschine bzw. den die Verteilmaschine ziehenden Schlepper eine Sensoreinrichtung, beispielsweise eine Kamera oder ein anderer geeigneter Sensor vorhanden ist, mittels welchem die erforderliche Ausbringmenge, beispielsweise die Saatgutmenge, Düngerbedarf etc. ermittelbar ist. Hierdurch findet im Bordcomputer eine Korrektur/Ergänzung der gespeicherten Daten auf der Karte mit den Sensordaten statt. Der Bordcomputer vergleicht also die gespeicherte Applikationskarte (Bodenarten, Wasserversorgung, Ertragsdaten) mit den von dem Sensor ermittelten Nährstoffversorgung je Standort (Standortbestimmung durch DGPS), so daß ein aktueller Abgleich zwischen den ermittelten und den abgespeicherten Daten erfolgt. Die Datenerfassung mittels der Sensoreinrichtung kann bei einem vorherigen Arbeitsgang und/oder in einem seperaten Überfahr- und/oder Aufzeichnungsarbeitsgang erfolgen. Diese ermittelten Daten lassen sich auf einem geeigneten Aufzeichnungsmedium aufzeichnen.

Die während des Arbeitsganges ausgebrachte Materialmenge sowie der von der Sensoreinrichtung ermittelte Ausbringmengenbedarf werden zu Dokumentationszwecken mittels der satellitengestützten Positionsbestimmung während des Arbeitsganges aufgezeichnet. Hiermit wird die Voraussetzung geschaffen, im nachhinein Applikationskarten, z.B. für die Düngerbilanzen etc. zu erstellen.

Weiterhin ist vorgesehen, daß bei "spontanen Nährstoffsprüngen" auf dem zu bearbeitenden bzw. zu bestellenden Feld, diese bei Erreichen durch Totzeiten bzw. Trägheit geglättet bzw. ignoriert werden. So werden beispielsweise bei kleineren Flächen, die Nährstoffsprünge zu den übrigen Feld aufweisen, erkannt und ausgespart bzw. geglättet. Bei diesen Stellen kann es sich z.B. um durch Tiere abgefressene Stellen handeln, die zwar vom Sensor als unterdüngt erkannt werden, jedoch in Wirklichkeit die gleiche Nährstoffversorgung wie der umliegende Bereich aufweisen. Diese vom Sensor erkannten, schnell wechselnden Nährstoffversorgungsbereiche werden durch Totzeiten bzw. einstellbare Trägheiten des Systems ausgeglichen. Hierdurch ist es also möglich, stetige Übergänge in der Nährstoffversorgung zu gewährleisten.

Die Sensoreinrichtung kann derart ausgebildet sein, daß Änderungen der Grünfärbung, die nicht durch Stickstoffmangel hervorgerufen werden, durch geeignete Mittel kompensiert werden. Die Auswertungen bei einer Sensoreinrichtung, die Variationen der Grünfarben der zu bedüngenden bzw. zu behandelnden Fläche erkennt, beruhen darauf, daß die verschiedenen Grünfärbungen eine Aussage über die Nährstoffversorgung der Pflanzen liefern.

Hierbei kann das System derart ausgebildet sein, daß Farbunterschiede, die durch Fehlstellen, Schwefelversorgung, Pilzkrankheiten, doppeltes Überfahren von Feldbereichen beim Drillen oder Lagergetreide etc. verursacht werden, erkannt werden. Durch Erkennen dieser Farbunterschiede sind also Möglichkeiten gegeben, die Änderungen der Grünfärbung, die nicht durch Stickstoffmangel hervorgerufen wird, zu kompensieren.

Desweiteren ist vorgesehen, daß in dem Rechner sortenspezifische Korrekturdaten abgespeichert sind, daß dem Rechner aktuell die Sorte, die auf dem Feld vorhanden ist, mitteilbar ist. Es sind also sortenabhängige Eichwerte im Jobcomputer gespeichert. Je zu behandelnder Sorte sind bei unterschiedlichen Ausgangssignalen des Sensors sortenspezifische Korrekturdaten erforderlich, die durch eine entsprechende Eingabe berücksichtigt werden. Die für die Korrektur/Eichung des Sensors notwendigen Daten sind im Bordcomputer gespeichert.

Die Grünfärbung der Pflanzen aufgrund der Nährstoffversorgung ist sortenspezifisch unterschiedlich.

Desweiteren ist zur Eichung der Sensoreinrichtung bzw. des Rechners vorgesehen; daß für jedes zu bearbeitende, bzw. abzuarbeitende Feld eine oder mehrere Teilflächen vorgesehen sind, die als Referenzflächen dienen, von welchem exakte Aufzeichnungen über die Nährstoffversorgung, Bodenproben etc. existieren, und daß diese Teilflächen jederzeit durch Satellitennavigation auffindbar sind, daß der (Grün-) Farbwert dieser Referenzflächen als Kalibrier- bzw. Einstellwert für die Anpassung des Sensors aktuell verwendet wird. Infolge dieser Maßnahmen wird auf einfachste Weise sicher gestellt, daß der Sensor die richtigen Daten ermittelt bzw. der Rechner die ihm von dem Sensor übermittelten Signale richtig interpretiert, damit eine optimale Anpassung der Ausbringmenge an die vorherrschenden Gegebenheiten möglich ist.

Diese Referenzfläche kann beispielsweise eine Größe von etwa 10 x 10m haben. Die Größe der Referenzfläche ist in geeigneter Größe festzulegen und an das Sichtfeld des Sensors anzupassen. Sie kann z.B. bis auf die Sichtfeldgröße des Sensor beschränkt sein.

Desweiteren kann vorgesehen sein, daß mehrere Sensoren zur Ermittlung der Nährstoffversorgung, etc. vorhanden sind. Hierbei können die Sensoren in einem Abstand zueinander angeordnet sein, wobei jeder Sensor einer Teilarbeitsbreite der Maschine zugeordnet ist. Anhand der von jedem Sensor gelieferten Daten kann ein Arbeitsbreiten- bzw. Teilarbeitsbreitenbereich gesteuert bzw. geregelt werden.

In einer anderen Ausführung kann vorgesehen sein, daß ein oder mehrere Sensoren vorhanden sind, welche den Arbeitsbereich periodisch abschwenken und somit über den gesamten Arbeitsbreitenbereich der Maschine insgesamt oder wahlweise teilbreitenspezifisch entsprechende Daten liefern.

Hierbei kann auch vorgesehen sein, daß mehrere Sensoren verschiedene Bereiche der Arbeitsbreite abtasten. Für eine Ansteuerung von x-Teilbreiten sind Daten vorzugsweise x + n Sensoren vorgesehen.

Weitere Einzelheiten der Erfindung sind den übrigen Unteransprüchen, der Beispielsbeschreibung und den Zeichnungen zu entnehmen. Hierbei zeigen
- Fig.1: den Ausschnitt einer Applikationskarte eines Feldes,
- Fig.2: das Verfahren, nach welchem die Einstellung einer hinter dem Ackerschlepper angeordneten, als Zentrifugaldüngerstreuer ausgebildeten Verteilmaschine durchgeführt wird,
- Fig.3: eine weitere, mittels des Verfahrens einstellbare, als Feldspritze ausgebildete Verteilmaschine und
- Fig. 4: eine weitere, mittels des Verfahrens einstellbare, als Drillmaschine ausgebildete Verteilmaschine.

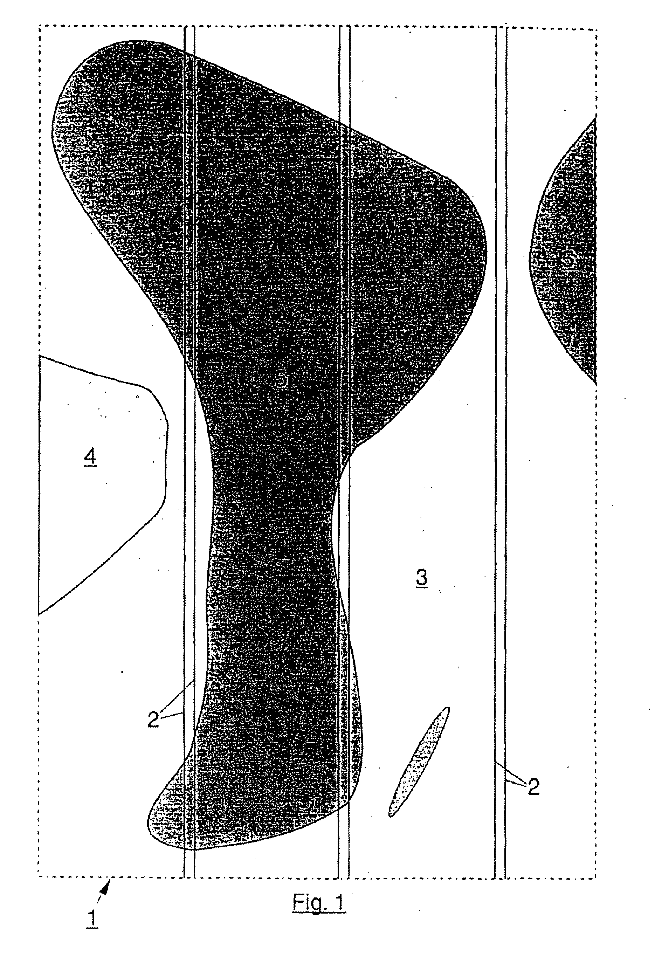

Zur bedarfsgerechten Bewirtschaftung von Flächen werden zunächst in eine Bodenkarte die spezifische Beschaffenheiten, wie beispielsweise Nährstoffversorgung, Bodenfestigkeit und/oder Bodenart etc. eingetragen. Hierdurch kann sich beispielsweise eine Applikationskarte 1 ergeben, wie sie in Fig.1 ausschnittsweise dargestellt ist. Mit den durchzogenen Linien sind die Fahrgassen 2 dargestellt, in welchen Abständen sie angelegt sind und in welchen Abständen das Feld durchfahren werden soll, um so ein genaues Anschlußfahren zu gewährleisten.

Desweiteren sind verschiedene Teilflächen unterschiedlich schattiert dargestellt. Die weiß unterlegte Fläche 3 stellt die überwiegende Beschaffenheit des Feldes, beispielsweise die Basisbeschaffenheit dieses Feldes dar. Die hell schattierte Fläche 4 stellt einen Bereich mit einer gegenüber der Basisfläche 3 niedrigeren Nährstoffversorgung dar, während die dunkler schattierten Flächen 5 eine höhere Nährstoffversorgung als die Basisfläche 3 aufweisen. Die in gleicher Weise schattierten Flächen weisen also jeweils eine ähnliche oder gleiche Nährstoffversorgung auf.

Die gemäß Fig.1 im Teilbereich dargestellte Applikationskarte ist in einem Rechner 6 abgespeichert, wobei die Lage der Fahrgassen 2 und die Teilflächen 3, 4, 5 standort- bzw. koordinatenmäßig abgespeichert sind und anhand des DGPS-Systems auffindbar sind.

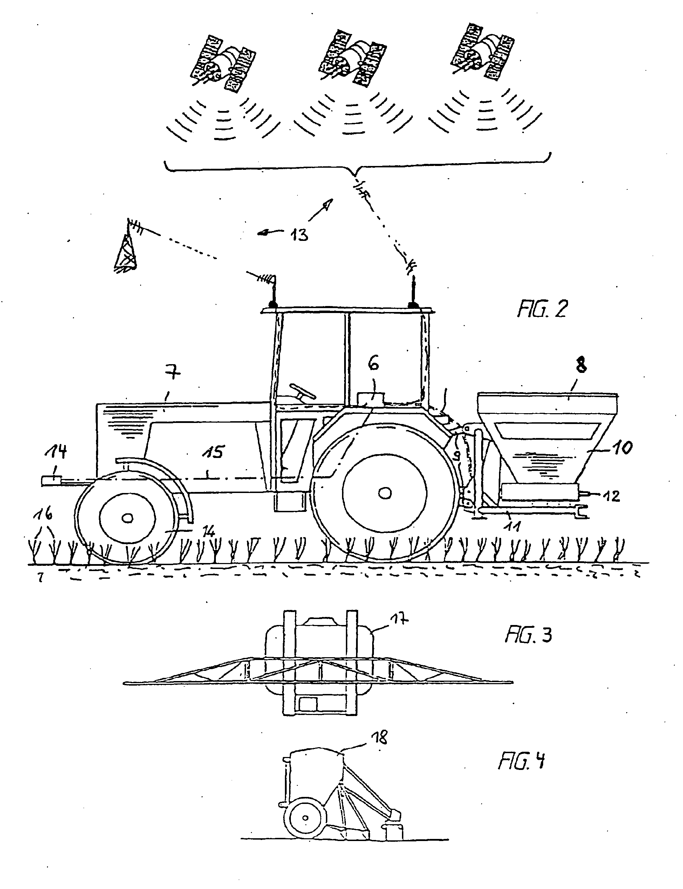

Um auf dem Feld Mineraldünger zu verteilen, ist ein Ackerschlepper 7 mit einem Zentrifugaldüngerstreuer 8 gemäß Fig.2 vorgesehen. An dem Ackerschlepper 7 ist über die Dreipunktkupplung 9 der Zentrifugaldüngerstreuer 8 angebaut. Der Zentrifugaldüngerstreuer 8 weist den Vorratsbehälter 10 und den Rahmen 11 auf. Unterhalb des Vorratsbehälters 10 sind die Schleuderscheiben 12 angeordnet, denen das sich im Vorratsbehälter 10 befindliche Material über eine Dosiereinrichtung zugeführt wird. Die jeder Schleuderscheibe 12 zugeordnete Dosiereinrichtung ist unabhängig von der anderen mittels geeigneter Stellelemente aufgrund der vom Bordrechner ermittelten Einstellwerte einstellbar.

Auf dem Ackerschlepper 7 ist der Bordrechner 6 angeordnet. In dieser als Bordrechner 6 ausgebildeten Rechnerstation sind über geeignete Eingabevorrichtungen, wie beispielsweise Tastatur, Chipkarte, etc. die Daten über das Feld sowie der Verteilmaschine einzugeben und zu speichern. So sind in dieser Rechnerstation die Bodenkarte, die Verteilung des Materials und die Einstellung des Düngers eingegeben (Applikationskarte), wie sie von dem Rechner auf dem Hof entsprechend eines Programmes berechnet worden sind.

Desweiteren arbeitet der Rechner 6 mit einen DGPS-System (Differential Global Positioning System) 13 zusammen. Dieses System 13 arbeitet satellitengestützt, so daß der aktuelle Standort des Schleppers 7 bzw. der Verteilmaschine 8 auf dem Acker entsprechend genau zu bestimmen ist. Anhand dieser standortermittelten Daten wird die Verteilmaschine 8 entsprechend der im Rechner 6 eingegebenen Daten der Applikationskarte 1 gesteuert.

Zusätzlich ist an dem Schlepper 7 der Sensor 14 angeordnet. Der Sensor 14 ist über das Kabel 15 mit dem Rechner 6 auf dem Ackerschlepper 7 verbunden. Dieses Sensorelement 14 liefert Informationen über die Beschaffenheit und den Zustand des Pflanzenbewuchses der zu bearbeitenden Fläche.

Die Funktionsweise des Verfahrens zum Steuern und Regeln der landwirtschaftlichen Bearbeitungs- und Verteilmaschinen ist folgendermaßen:

Durch Sammlung von Ertragsdaten je Standort, Daten über die tatsächlich vorhandene Nährstoffversorgung des Bodens je Standort etc. wird zunächst die Applikationskarte 1, wie ein Ausschnitt in Fig.1 dargestellt ist, in bekannter Weise erstellt. Diese Applikationskarte 1 gibt eine Aussage darüber, wie der tatsächliche Nährstoffbedarf bzw. die tatsächliche Nährstoffversorgung je Standort ist. Diese einzelnen Daten je Standort lassen sich mittels einer satellitengestützten Positionsbestimmung auf dem Acker ausreichend genau auffinden.

Während des Ausbringvorganges auf dem Feld wird die Bearbeitungs- bzw. Verteilmaschine 8 entsprechend der anhand der Applikationskarte 1 in den Rechner 6 eingespeicherten Daten auf dem Feld gesteuert oder geregelt, so daß die gewünschte Menge Material je Standort und Fläche ausgebracht wird. Diese dann tatsächlich auf dem Feld ausgebrachte Menge wird während des Ausbringvorganges standortspezifisch mit Hilfe einer satellitengestützten Positionsbestimmung auf einem geeigneten Medium, welches an dem Rechner 6 angeschlossen ist, aufgezeichnet.

Durch den an der Verteilmaschine 8 bzw. den die Verteilmaschine 8 ziehenden Schlepper 7 angeordneten Sensor 14 läßt sich aufgrund der unterschiedlichen Grünfärbung der auf dem Feld vorhandenen Nutzpflanzen 16 die Nährstoffversorgung ermitteln. Um eine möglichst genaue Ermittlung der Nährstoffversorgung bzw. des Nährstoffbedarfes mit Hilfe des Sensors 14 durchführen zu können, ist auf jedem zu bearbeitenden Feld mindestens eine Referenzfläche, von welcher exakte Aufzeichnungen über die Nährstoffversorgung, Bodenproben etc. existieren, vorhanden. Diese Teilfläche kann jederzeit durch Satellitennavigation (DGPS) aufgefunden werden, so daß aktuell die Farbwerte dieser Referenzfläche als Kalibrier- bzw. Einstellwert für die Anpassung des Sensors 14 verwendet werden können. Desweiteren wird dem Rechner 6 mitgeteilt, welche Nutzpflanzensorte sich auf dem zu bearbeitenden Feld befindet, damit ein entsprechender Abgleich anhand der sortenspezifischen Korrekturdaten, die im Rechner 6 abgespeichert sind, vorgenommen werden kann.

Während des Ausbringvorganges findet ein aktueller Vergleich zwischen den Daten der Applikationskarte 1 und der von dem Sensor 14 ermittelten Daten statt, wobei diese beiden Werte miteinander verglichen und somit eine Korrektur bzw. Abgleich zwischen den aktuellen und den abgespeicherten Daten erfolgt.

Weiterhin kann in dem Rechner 6 eine Korrektur in der Weise vorgenommen werden, daß Änderungen der Grünfärbung, die nicht durch Stickstoffmangel hervorgerufen werden, durch geeignete Mittel kompensiert werden.

Darüber hinaus werden Farbunterschiede, die durch Fehlstellen, Schwefelversorgung, Pilzkrankheiten, doppeltes Überfahren von Feldbereichen beim Drillen, oder Lagergetreide etc. verursacht werden, erkannt, so daß Fehlinterpretationen der vom Sensor 14 ermittelten Daten möglichst ausgeschlossen werden.

Außerdem ist in dem Rechner 6 eine geeignete Software vorgesehen, welche bei vorhandenen spontanen Nährstoffsprüngen diese durch Totzeit und Trägheit ausgleicht, um so stetige Übergänge in der Nährstoffversorgung zu gewährleisten.

In entsprechender Weise, wie anhand eines Düngerstreuers 8 vorgeschrieben, können auch andere Verteilmaschinen, wie beispielsweise Feldspritzen 17 gemäß Fig.3 und Drillmaschinen 18 gemäß Fig. 4 gesteuert und/oder geregelt werden.

## Patentansprüche

1. Verfahren zum Steuern und/oder Regeln von landwirtschaftlichen Bearbeitungsund/oder Verteilmaschinen, bei dem in einem Rechner maschinenspezifische Daten zur Einstellung der Maschine je Standort und Fläche einspeicherbar sowie Bearbeitungs- und/oder Verteilcharakteristika vorgebbar sind, **dadurch gekennzeichnet, daß** mit Hilfe einer satellitengestützten Positionsbestimmung während des Arbeitsganges die ausgebrachte Menge standortspezifisch aufgezeichnet wird, daß an der Verteilmaschine bzw. den die Verteilmaschine ziehenden Schlepper (7) eine Sensoreinrichtung (14), beispielsweise eine Kamera oder ein anderer geeigneter Sensor vorhanden ist, mittels welchem die erforderliche Ausbringmenge, beispielsweise die Saatgutmenge, Düngerbedarf etc. ermittelbar ist, daß die Nährstoffversorgung bzw. der zu ergänzende Nährstoffbedarf von dem Sensor (14) erkannt wird, daß in dem Rechner (6) eine Applikationskarte (1), in welcher der Nährstoffbedarf je Standort abgespeichert ist, vorhanden ist, daß in dem Rechner (6) eine Korrektur/Ergänzung/Vergleich zwischen den abgespeicherten Daten der Applikationskarte (1) und den vom Rechner (6) ermittelten Daten erfolgt.

2. Verfahren nach Anspruch 2, **dadurch gekennzeichnet, daß** die ermittelten Werte auf einem geeigneten Aufzeichnungsmedium aufgezeichnet werden.

3. Verfahren nach Anspruch 1, **dadurch gekennzeichnet, daß** bei vorhandenen "spontanen Nährstoffsprüngen" diese durch Totzeit bzw. Trägheit ausgeglichen werden.

4. Verfahren nach Anspruch 1, **dadurch gekennzeichnet, daß** Änderungen der Grünfärbung, die nicht durch Stickstoffmangel hervorgerufen werden, durch geeignete Mittel kompensiert werden.

5. Verfahren nach Anspruch 1, **dadurch gekennzeichnet, daß** Farbunterschiede, die durch Fehlstellen, Schwefelversorgung, Pilzkrankheiten, doppeltes Überfahren von Feldbereichen beim Drillen, Lagergetreide etc., verursacht werden, erkannt werden.

6. Verfahren nach einem oder mehreren der vorstehenden Ansprüche, **dadurch gekennzeichnet, daß** in dem Rechner (6) sortenspezifische Korrekturdaten abgespeichert sind, daß dem Rechner (6) aktuell die Sorte, die auf dem Feld vorhanden ist, mitteilbar ist.

7. Verfahren nach einem oder mehreren der vorstehenden Ansprüche, **dadurch gekennzeichnet, daß** für jedes zu bearbeitende bzw. abzuarbeitende Feld ein oder mehrere Teilflächen vorgesehen sind, die als Referenzflächen dienen, von welchem exakte Aufzeichnungen über die Nährstoffversorgung, Bodenproben etc. existieren, und daß diese Teilflächen jeder Zeit durch ein geeignetes Navigationsverfahren, beispielsweise DGPS, auffindbar sind, daß der Farbwert dieser Referenzflächen als Kalibrier- bzw. Einstellwert für die Anpassung des Sensor (14) aktuell verwendet wird.

8. Verfahren nach einem oder mehreren der vorstehenden Ansprüche, **dadurch gekennzeichnet, daß** mehrere Sensoren (14) zur Ermittlung der Nährstoffversorgung etc. vorhanden sind.

9. Verfahren nach einem oder mehreren der vorstehenden Ansprüche, **dadurch gekennzeichnet, daß** ein Sensor (14) vorhanden ist, welcher den Arbeitsbereich periodisch abschwenkt.

10. Verfahren nach einem oder mehreren der vorstehenden Ansprüche, **dadurch gekennzeichnet, daß** die Datenerfassung mittels der Sensoreinrichtung bei einem vorherigen Arbeitsgang oder in einem seperaten Überfahr- und/oder Aufzeichnungsarbeitsgang erfolgt.

## Claims

1. Method for controlling/or regulating agricultural processing and/or distributing machines, wherein, in a computer, machine-speclfic data for adjusting the machine, depending on location and area, is storable and processing and/or distributing characteristics are predeterminable, **characterised in that,** with the assistance of a satellite-supported posifion finding system, the quantity deposited during the working cycle is recorded specific to the location, there is a sensor means (14), for example a camera or another suitable sensor, on the distributing machine or respectively on the tractor (7) towing the distributing machine, by means of which sensor the necessary quantity to be distributed, for example the seed quantity, fertiliser requirement etc. is determinable, the nutrient supply or respectively the additional nutrient requirement is recognised by the sensor (14), **in that** in the computer (6) there is an application card (1), in which the nutrient requirement per location is stored, **in that** in the computer (6) there is a correction/addition/comparison between the stored data of the application card (1) and the data determined by the computer (6).

2. Method according to claim 2, **characterised in that** the values determined are recorded on a suitable recording medium.

3. Method according to claim 1, **characterised in that** where there are "spontaneous nutrient jumps", these can be compensated for by dead time or inactivity.

4. Method according to claim 1, **characterised in that** changes in the green colouring, which are not caused by lack of nitrogen, are compensated by appropriate means.

5. Method according to claim 1, **characterised in that** colour differences, which are caused by gaps, a supply of sulphur, fungal disease, travelling over the same regions twice when drilling, grain stocks etc, are recognised.

6. Method according to one or more of the preceding claims, **characterised in that** type-specific correcting data is stored in the computer (6), and **in that** the type currently on the field is communicable to the computer (6).

7. Method according to one or more of the preceding claims, **characterised in that** for each field to be processed or respectively worked there are one or more part areas, which act as reference areas, from which there are exact recordings on the nutrient supply, soll samples etc. and **in that** these part areas are findable at all times through a suitable navigation method, for example DGPS, and **in that** the colour value of these reference areas is currently used as calibration value or respectively adjustment value for the adaptation of the sensor (14).

8. Method according to one or more of the preceding claim, **characterised in that** there is a plurality of sensors (14) for determining the nutrient supply etc.

9. Method according to one or more of the preceding claims, **characterised in that** there is one sensor (14) which periodically turns away from the working region,

10. Method according to one or more of the preceding claims, **characterised in that** the data is acquired though the intermediary of the sensor means in a previous working cycle or in a separate travelling procedure and/or recording procedure.

## Revendications

1. Procédé de commande et/ou de régulation de machines agricoles pour le traitement et/ou la distribution, selon lequel un calculateur contient les données spécifiques à la machine pour régler la machine suivant l'emplacement et la surface ainsi que les caractéristiques de travail et/ou de distribution,
**caractérisé en ce que**
à l'aide d'une détermination assistée par satellite pendant l'opération de travail, on enregistre la quantité distribuée de manière spécifique à l'emplacement,
la machine distributrice ou le tracteur (7) tirant la machine distributrice comporte une installation de capteur (14) par exemple une caméra ou un autre capteur permettant de déterminer la quantité nécessaire à distribuer par exemple la quantité de semences, la demande d'engrais etc.,
l'alimentation en amendement ou la demande complémentaire en amendement est reconnue par le capteur (14),
le calculateur (6) comporte une carte d'application (1) qui enregistre la demande en amendement suivant l'endroit, et dans le calculateur (6), il est effectué une correction/complément/comparaison entre les données mémorisées de la carte d'application (1) et les données transmises par le calculateur (6).

2. Procédé selon la revendication 2,
**caractérisé en ce que**
les valeurs obtenues sont enregistrées sur un support d'enregistrement approprié.

3. Procédé selon la revendication 1,
**caractérisé en ce qu'**
en présence de sauts alimentaires, ces phénomènes sont compensés par des temps morts ou des moments d'inertie.

4. Procédé selon la revendication 1,
**caractérisé en ce que**
les variations de la couleur verte non provoquées par un manque de matières azotées sont compensées par les moyens appropriés.

5. Procédé selon la revendication 1,
**caractérisé en ce qu'** des zones à
on identifie les différences de couleur provoquées par des zones à défaut, une alimentation en soufre, des maladies phytosanitaires, le double passage de zones de champ lors de l'ensemencement, l'engrais de couverture etc.

6. Procédé selon l'une ou plusieurs des revendications précédentes,
**caractérisé en ce que**
le calculateur (6) contient des données de correction spécifiques à une sorte de plante, le calculateur (6) déterminant actuellement la sorte de plante qui se trouve dans le champ.

7. Procédé selon l'une ou plusieurs des revendications précédentes,
**caractérisé en ce que**
pour chaque champ à travailler ou à traiter, une ou plusieurs surfaces partielles servent de surfaces de référence dont on a un enregistrement exact concernant l'alimentation en produit nutritif, les échantillons de sol etc, et ces surfaces partielles peuvent se trouver à tout instant par un système de navigation approprié, par exemple un système DGPS, la couleur de ces surfaces de référence étant utilisée actuellement comme valeur de réglage ou valeur de calibrage pour l'adaptation du capteur (14).

8. Procédé selon l'une ou plusieurs des revendications précédentes,
**caractérisé par** plusieurs capteurs (14) pour déterminer la demande en amendement.

9. Procédé selon l'une ou plusieurs des revendications précédentes,
**caractérisé par** un capteur (14) qui balaie périodiquement la plage de travail.

10. Procédé selon l'une ou plusieurs des revendications précédentes,
**caractérisé en ce que**
la saisie des données à l'aide de l'installation de capteur se fait au cours d'une opération antérieure ou une opération de travail d'enregistrement ou de capteur, séparée.
